# EUROPÄISCHE PATENTSCHRIFT

(11) **EP 3 424 801 B1**
(45) Veröffentlichungstag und Bekanntmachung des Hinweises auf die Patenterteilung: **09.09.2020**
(21) Anmeldenummer: 18174528.2
(22) Anmeldetag: 28.05.2018
(51) Int. Cl.: B62D 15/02, B60W 30/06, B60W 40/10

(54) **VERFAHREN ZUM UNTERSTÜTZEN EINES FAHRERS EINES KRAFTFAHRZEUGS BEIM EINPARKEN, BEI WELCHEM EINE STARTPOSITION DES KRAFTFAHRZEUGS FÜR DEN EINPARKVORGANG IN EINE PARKLÜCKE BESTIMMT WIRD, FAHRERASSISTENZSYSTEM SOWIE KRAFTFAHRZEUG**
METHOD FOR ASSISTING A DRIVER OF A MOTOR VEHICLE WHEN PARKING, WHERE A STARTING POSITION OF THE MOTOR VEHICLE FOR PARKING IN A PARKING SPACE IS DETERMINED, DRIVER ASSISTANCE SYSTEM AND MOTOR VEHICLE
PROCÉDÉ D'AIDE À LA CONDUITE D'UN VÉHICULE AUTOMOBILE LORS DU STATIONNEMENT, SELON LEQUEL UNE POSITION DE DÉPART DE VÉHICULE AUTOMOBILE POUR LA MAN UVRE DE STATIONNEMENT DANS UN ESPACE DE STATIONNEMENT EST DÉTERMINÉE, SYSTÈME D'AIDE À LA CONDUITE AINSI QUE VÉHICULE AUTOMOBILE

(30) Priorität: 31.05.2017 DE 102017111880
(43) Veröffentlichungstag der Anmeldung: 09.01.2019
(73) Patentinhaber: Valeo Schalter und Sensoren GmbH, 74321 Bietigheim-Bissingen (DE)
(72) Erfinder: Blinkle, Frank, 74321 Bietigheim-Bissingen (DE)
(74) Vertreter: Pothmann, Karsten

(56) Entgegenhaltungen:
- DE-A1-102014 110 851
- DE-A1-102015 115 256
- JP-A- 2001 001 931

## Beschreibung

Die Erfindung betrifft ein Verfahren zum Unterstützen eines Fahrers eines Kraftfahrzeugs beim Einparken, bei welchem mittels zumindest einer Erfassungseinrichtung des Kraftfahrzeugs eine Parklücke vermessen wird und eine Startposition des Kraftfahrzeugs für den Einparkvorgang in die Parklücke in Abhängigkeit der Vermessung der Parklücke bestimmt wird. Ferner betrifft die Erfindung ein Fahrerassistenzsystem sowie ein Kraftfahrzeug.

Aus dem Serienfahrzeugbau sind bereits Fahrerassistenzsysteme bekannt, welche den Fahrer des Kraftfahrzeugs bei einem Einparkvorgang unterstützen. Dazu wird insbesondere eine erkannte Parklücke mittels einer Erfassungseinrichtung vermessen und dem Fahrer wird die Position angezeigt, von der aus eingeparkt werden kann. Insbesondere ist bei diesen Einparkhilfen die Erkennung der Parklücke für den Fahrer nicht sichtbar. Des Weiteren sind aus dem Serienfahrzeugbau Fahrerassistenzsysteme, insbesondere Einparkhilfesysteme, bekannt, welche eine Erkennung einer Parklücke dem Fahrer anzeigen und sobald dieser auf der Position angekommen ist, ab welche eingeparkt werden kann, diese dem Fahrer angezeigt wird. Insbesondere kann die Einparkposition, oder auch Startposition genannt, auf einer Anzeigeeinheit angezeigt werden und/oder kann ein akustisches Signal für den Fahrer ertönen. Nachteilig hierbei ist, dass das Kraftfahrzeug bei der Anzeige der bekannten Einparkposition sich noch in Bewegung befindet, sodass die mögliche Einparkposition oftmals "überfahren" wird, da das Kraftfahrzeug noch eine bestimmte Wegstrecke zurücklegt, bis das Kraftfahrzeug endgültig zum Stillstand kommt, so dass der Einparkvorgang begonnen werden kann. Dadurch kann der Eindruck entstehen, dass das Parken erst sehr spät möglich ist. Dies kann sowohl für den Fahrer als auch für weitere Verkehrsteilnehmer, die sich beispielsweise hinter dem Kraftfahrzeug befinden, sehr unkomfortabel sein und kann zu einer kritischen Situation im Straßenverkehr führen.

JP 2001 001931 A , die als nächstliegender Stand der Technik betrachtet wird beschreibt ein Verfahren zur Erhöhung der Präzision der automatischen Lenksteuerung in einer Vorrichtung, die das Antreiben eines Lenkstellglieds steuert. Dies geschieht durch Änderung des Betriebszeitpunkts einer Steuerunterstützungseinrichtung gemäß den erfassten Ergebnissen einer Erfassungseinrichtung für die Fahrumgebung.

DE 10 2015 115 256 A1 beschreibt ein Parkunterstützungssystem, welches ein elektronisches Steuergerät umfasst. Das elektronische Steuergerät ist konfiguriert, während einer Parkunterstützung für ein Fahrzeug zu erfassen, dass das Fahrzeug sich durch eine Wechselposition hindurchbewegt und einen vorbestimmten Zustand erreicht hat, und, wenn erfasst ist, dass das Fahrzeug den vorbestimmten Zustand erreicht hat, einen Hinweis bereitzustellen, dass das Fahrzeug den vorbestimmten Zustand erreicht hat, indem es einem Lenkrad des Fahrzeugs eine vorbestimmte Vibration verleiht.

Aufgabe der vorliegenden Erfindung ist es, ein Verfahren, ein Fahrerassistenzsystem sowie ein Kraftfahrzeug zu schaffen, mittels welchem ein verbesserter Einparkvorgang des Kraftfahrzeugs ermöglicht ist.

Diese Aufgabe wird durch ein Verfahren, ein Fahrerassistenzsystem sowie ein Kraftfahrzeug gemäß den unabhängigen Ansprüchen gelöst.

Ein Aspekt der Erfindung betrifft ein Verfahren zum Unterstützen eines Fahrers eines Kraftfahrzeugs beim Einparken. Mittels zumindest einer Erfassungseinrichtung des Kraftfahrzeugs wird eine Parklücke vermessen und es wird eine Startposition des Kraftfahrzeugs für den Einparkvorgang in die Parklücke in Abhängigkeit der Vermessung der Parklücke bestimmt.

Während der Vermessung der Parklücke wird eine von zumindest einem aktuellen und/oder zumindest einem zukünftigen Wert zumindest eines den Betriebszustand des Kraftfahrzeugs charakterisierenden Parameter abhängige, zu erwartende Halteposition des Kraftfahrzeugs bestimmt und die Halteposition mit der Startposition verglichen, wobei ein Vergleich der Halteposition mit der Startposition durchgeführt wird, sobald ein vorbestimmter Genauigkeits-Schwellwert für die Bestimmung der Halteposition überschritten wird.

Dadurch ist es insbesondere ermöglicht, dass bereits die Halteposition dem Fahrer beispielsweise auf einer Anzeigeeinheit des Kraftfahrzeugs ausgegeben werden kann, sobald die Halteposition ermittelt ist. Insbesondere ist dadurch der den Betriebszustand charakterisierende Parameter mit bei der Bestimmung der Halteposition berücksichtigt, sodass das Kraftfahrzeug dann unter Einbeziehung des den Betriebszustand charakterisierende Parameters bei Erreichen der Halteposition dann auf der Startposition zum Stillstand kommt. Insbesondere ist dadurch zuverlässig die Startposition des Kraftfahrzeugs für den Einparkvorgang erreichbar, sodass dann einfach, komfortabel und verkehrssicher der Einparkvorgang beginnen kann. Bei der Vermessung wird schon überprüft, ob das Kraftfahrzeug mit spezifischen Betriebsbedingungen an der Startposition angelangen wird, so dass bereits beim vermessen reagiert werden kann, wenn diesbezüglich unerwünschte Abweichungen auftreten würden. Dadurch wird das genaue und schnelle Erreichen der Startposition begünstigt.

Unter Startposition ist insbesondere die Position anzusehen, bei welcher das Kraftfahrzeug aus dem Stillstand heraus und mit vorbestimmter Trajektorie nach Vermessung der Parklücke in die Parklücke eingeparkt werden kann. Die Startposition stellt also insbesondere den Startpunkt der Trajektorie dar. Insbesondere kann dann der Einparkvorgang mittels einer Rückwärtsbewegung eingeleitet werden.

Insbesondere kann vorgesehen sein, dass der zumindest eine zukünftige Wert beispielsweise innerhalb einer vorgegebenen Zeitspanne bestimmt wird. Beispielsweise kann der zumindest eine zukünftige Wert für eine Zeitspanne von beispielsweise 15 Sekunden insbesondere vor dem Einparkvorgang bestimmt werden. Ebenfalls möglich ist, dass erst mit dem Beginn einer Parklückensuche und insbesondere mit dem Erfassen einer potentiellen Parklücke zum Einparken der zukünftige Wert bestimmt wird. Insbesondere wird der zumindest eine zukünftige Wert zwischen der Vermessung der Parklücke und dem Einparkvorgang bestimmt, insbesondere vor dem Erreichen der Startposition des Kraftfahrzeugs bestimmt.

Bei dem Verfahren wird das Kraftfahrzeug beispielsweise an einer Stellplatzreihe vorbeigefahren. Mittels der Erfassungseinrichtung kann dann die Stellplatzreihe kontinuierlich auf freie Parkplätze beziehungsweise Parklücken überprüft werden. Falls eine Parklücke erkannt wurde, wird diese mittels der Erfassungseinrichtung vermessen. Die Erfassungseinrichtung weist dazu insbesondere eine Mehrzahl von Sensoren auf, welche beispielsweise als Radarsensoren, Lidarsensoren, Kamerasensoren oder Ultraschallsensoren ausgebildet sind. Bevorzugt sind die Sensoren als Lidarsensoren ausgebildet. Anhand der erfassten Parklücke wird noch während des Vorbeifahrens des Kraftfahrzeugs an der Parklücke eine mögliche Startposition für den Einparkvorgang in die Parklücke ermittelt. Dabei kann die Startposition zusätzlich anhand der Abmessungen des Kraftfahrzeugs, die beispielsweise in einer Speichereinrichtung hinterlegt sind, bestimmt werden. Anhand der gespeicherten Abmessungen des Kraftfahrzeugs und der ermittelten Abmessungen der Parklücke kann eine Fahrtrajektorie für den Einparkvorgang ermittelt werden. Entlang dieser Fahrtrajektorie kann dann das Kraftfahrzeug ausgehend von der Startposition in die Parklücke eingeparkt werden.

Insbesondere kann dann die Startposition den Punkt beschreiben, an dem das Einparken des Kraftfahrzeugs entlang der Fahrtrajektorie beim Vorbeifahren an der Parklücke erstmals, insbesondere mittels eines Rückwärtsfahrens, möglich ist. Dies ist insbesondere vorteilhaft, da es dem Fahrer üblicherweise nicht klar ist, wie weit dieser ein Kraftfahrzeug an der Parklücke vorbei bewegen soll, um die Startposition zu erreichen. Dies führt dann oft dazu, dass der Fahrer erst weit nach der eigentlichen Startposition anhält, um den Einparkvorgang zu starten. Vorliegend wird dem Fahrer also eine Halteposition ausgegeben, durch welche unter Einbeziehung des den Betriebszustand charakterisierenden Parameters die Startposition erreicht wird. Insbesondere wird die Halteposition ausgegeben, wenn es sich bei dem Vergleichen herausstellt, dass die ermittelte Halteposition mit der Startposition übereinstimmt, so dass der Einparkvorgang komfortabel durchgeführt werden kann. Somit findet nach der Ermittlung der Startposition ein dauerhaftes Vergleichen der Halteposition mit der Startposition statt und die Halteposition wird insbesondere dann ausgegeben, wenn die Halteposition mit der Startposition übereinstimmt. Die Ausgabe an den Fahrer kann beispielsweise über eine entsprechende Benutzerschnittstelle des Kraftfahrzeugs erfolgen. Insbesondere kann dem Fahrer dadurch während des Vorbeifahrens an der Parklücke die Information über die Halteposition ausgegeben werden. Dadurch kann der Einparkvorgang für den Fahrer und für die weiteren Verkehrsteilnehmer, die sich insbesondere hinter dem Kraftfahrzeug befinden, komfortabler und verkehrssicherer gestaltet werden.

Ein Vergleich der Halteposition mit der Startposition wird durchgeführt, sobald ein vorbestimmter Genauigkeits-Schwellwert für die Bestimmung der Halteposition überschritten wird. Insbesondere ist durch hochauflösende Sensoren ein frühzeitiges Erkennen einer Parklücke möglich. Insbesondere kann es dann aber vorkommen, dass noch keine zuverlässige Aussage über die Halteposition, beispielsweise aufgrund des noch langen Weges, welcher noch viele Beeinträchtigungen, wie beispielsweise ein weiteres Kraftfahrzeug, welches sich vordem Kraftfahrzeug befinden kann und bremst, aufweisen kann. Ebenfalls möglich ist, dass keine zuverlässige Aussage über die Halteposition getroffen werden kann, da das Kraftfahrzeug sich der Parklücke noch mit einer zu hohen Geschwindigkeit nähert und beispielsweise ein Bremsweg aufgrund von nicht vorhersagbaren Unzulänglichkeiten, wie beispielsweise eine Veränderung der Bremskraft, nicht präzise vorhergesagt werden kann. Weiterhin möglich ist, dass beispielsweise aufgrund einer noch zu hohen Zeitspanne bis das Kraftfahrzeug die Halteposition erreicht, beispielsweise aufgrund von stockendem Verkehr, keine zuverlässige Aussage getroffen werden kann. Daher kann die Ermittlung der Halteposition beispielsweise dahingehend begrenzt sein, dass erst bei einem Unterschreiten eines vorbestimmten Abstands zur Parklücke und/oder bei einem Unterschreiten einer vorbestimmten Geschwindigkeit des Kraftfahrzeugs und/oder eine vorbestimmte Zeitspanne bis zum Erreichen der Halteposition die Halteposition bestimmt wird. Insbesondere kann der Genauigkeits-Schwellwert für die Halteposition abhängig vom Abstand zur Parklücke und/oder von der Geschwindigkeit des Kraftfahrzeugs und/oder der Zeitspanne bis zum Erreichen der Halteposition sein, so dass ein zuverlässiger Vergleich durchgeführt werden kann. Dadurch kann verhindert werden, dass ohne hinreichende Informationen, insbesondere über den Umgebungsbereich vor dem Kraftfahrzeug, bereits die Halteposition bestimmt wird. Insbesondere ist dadurch eine zuverlässige Ermittlung der Halteposition gegeben, da diese insbesondere erst bei dem Überschreiten des Genauigkeits-Schwellwerts, mit anderen Worten mit einer genügend hohen Informationsdichte und damit mit einer genügend hohen Wahrscheinlichkeit der Richtigkeit der Halteposition, der Vergleich durchgeführt werden kann.

Es hat sich als vorteilhaft erwiesen, wenn die Halteposition in Abhängigkeit einer aktuellen und/oder zukünftigen Geschwindigkeit des Kraftfahrzeugs und/oder in Abhängigkeit einer aktuellen und/oder zukünftigen Beschleunigung des Kraftfahrzeugs und/oder in Abhängigkeit einer aktuellen und/oder zukünftigen Bewegungsrichtung des Kraftfahrzeugs und/oder in Abhängigkeit eines aktuellen Lenkwinkels des Kraftfahrzeugs und/oder in Abhängigkeit einer zu erwartenden Reaktionszeit des Fahrers als Parameter bestimmt wird. Beispielsweise kann die aktuelle Geschwindigkeit über ein Tachometer beziehungsweise eine Drehgeschwindigkeit der Räder bestimmt werden. Die zukünftige Geschwindigkeit kann beispielsweise anhand einer Stellung des Gaspedals des Kraftfahrzeugs bestimmt werden beziehungsweise, insbesondere bei einem semi-autonomen Fahrbetrieb des Kraftfahrzeugs, anhand der Werte einer Steuerungseinrichtung, welche den Fahrbetrieb, insbesondere den semi-autonomen Fahrbetrieb, steuert. Die aktuelle und/oder zukünftige Beschleunigung kann insbesondere durch die Gaspedalstellung des Kraftfahrzeugs und/oder durch eine Bremspedalstellung und/oder Bremskraftbeaufschlagung am Bremspedal bestimmt werden. Des Weiteren kann die Halteposition insbesondere über die aktuelle und/der zukünftige Bewegungsrichtung bestimmt werden. Insbesondere kann dies beispielsweise anhand eines GNSS (Global Navigation Satellite System)-Systems beziehungsweise des aktuellen Lenkwinkels, welcher insbesondere am Lenkrad beziehungsweise an den Reifen eingestellt ist, bestimmt werden. Ebenfalls möglich ist, dass in Abhängigkeit einer zu erwartenden Reaktionszeit des Fahrers, bis er beispielsweise eine Verzögerung des Kraftfahrzeugs einleitet, welche insbesondere in einem Speichermedium abgespeichert sein kann, bestimmt wird. Ebenfalls möglich ist, dass eine Latenzzeit einer Steuereinrichtung, welche dazu ausgebildet ist das Verfahren durchzuführen, mit berücksichtigt wird. Durch die Einbeziehung der unterschiedlichen Abhängigkeiten der Halteposition kann somit eine zuverlässige und genaue Halteposition bestimmt werden, sodass die Halteposition zuverlässig mit der Startposition verglichen werden kann. Dadurch kann insbesondere dem Fahrer die Halteposition derart angezeigt werden, dass er entsprechend den aufgezählten Abhängigkeiten dann auf der Startposition mit dem Kraftfahrzeug zum Stillstand kommt.

Gemäß einer vorteilhaften Ausgestaltungsform kann ein zukünftiger Wert eines Parameters geschätzt werden oder als abgespeicherter und festgelegter Erwartungswert zugrunde gelegt werden. Insbesondere kann beispielsweise der Parameter geschätzt werden, indem auf Vergangenheitswerte des den Betriebszustand charakterisierenden Parameters, welche beispielsweise in einem Speichermedium des Kraftfahrzeugs hinterlegt sind, zurückgegriffen wird. Des Weiteren ist es möglich, dass auf Basis voreingestellter festgelegter Erwartungswerte der Parameter zugrunde gelegt wird, welche beispielsweise durch vorher durchgeführte Versuchsreihen ermittelt wurden. Insbesondere kann mittels der Abschätzung beziehungsweise mit der festgelegten Zugrundelegung der den Betriebszustand charakterisierende Parameter einfach bestimmt werden, sodass die Halteposition einfach mit der Startposition verglichen werden kann.

Es hat sich ebenfalls als vorteilhaft erwiesen, wenn das Schätzen abhängig von zumindest einem aktuellen Wert eines Parameters durchgeführt wird. Beispielsweise kann dann eine Verzögerung, also eine negative Beschleunigung, anhand der aktuellen Bremspedalstellung abgeschätzt werden. Insbesondere kann dadurch die Schätzung sehr zuverlässig durchgeführt werden, so sodass die Halteposition positionssicher bestimmt werden kann.

Ebenfalls vorteilhaft ist, wenn die Halteposition in Abhängigkeit eines zu erwartenden Anhaltewegs des Kraftfahrzeugs bestimmt wird, wobei der Anhalteweg abhängig von dem zumindest einen aktuellen und/oder zumindest einen zukünftigen Wert zumindest eines den Betriebszustand des Kraftfahrzeugs charakterisierenden Parameters bestimmt wird. Da insbesondere die zurückgelegte Strecke von der Halteposition hin zur Startposition vom Anhalteweg des Kraftfahrzeugs abhängig ist, kann somit die Startposition zuverlässig ermittelt werden. Beispielsweise kann dazu die aktuelle Geschwindigkeit und die Verzögerung des Kraftfahrzeugs mit berücksichtigt werden. Ebenfalls möglich ist, dass beispielsweise Witterungseinflüsse, wie Glätte oder nasses Laub, bei der Bestimmung des Anhaltewegs mit berücksichtigt werden. Dadurch lässt sich zuverlässig die Halteposition bestimmen.

Gemäß einer vorteilhaften Ausgestaltungsform kann die Halteposition optisch auf einer Anzeigeeinheit angezeigt werden und/oder die Startposition auf einer Anzeigeeinheit angezeigt werden. Insbesondere kann das Erreichen der Halteposition optisch angezeigt werden. Insbesondere kann durch ein optisches Anzeigen der Startposition der Fahrer, insbesondere nach dem Stillstand des Kraftfahrzeugs, überprüfen, ob das Kraftfahrzeug die Startposition erreicht hat. Insbesondere kann dann, sollte beispielsweise der Fahrer vor der Startposition zum Stillstand gekommen sein, der Fahrer eine weitere Vorwärtsbewegung des Kraftfahrzeugs initiieren, bis er tatsächlich auf der Startposition angekommen ist. Insbesondere kann die Anzeigeeinheit eine Anzeigeeinheit des Kraftfahrzeugs sein. Beispielsweise kann als Anzeigeeinheit eine Kopf-oben-Anzeigevorrichtung, welche auch als Head-up-Display bezeichnet wird, und/oder eine Kombiinstrumentenanzeigeeinheit bereitgestellt sein. Ebenfalls möglich ist, dass die Halteposition, insbesondere das Erreichen der Halteposition, und/oder der Startposition akustisch über Lautsprecher des Kraftfahrzeugs und/oder haptisch an den Fahrer ausgegeben wird. Es können dazu entsprechende Aktuatoren für eine haptische Rückmeldung am Lenkrad verwendet werden, mittels welchen an den Fahrer ein haptisches Signal ausgegeben wird, sodass dieser über das Erreichen der Halteposition und/oder der Startposition in Kenntnis gesetzt ist. Dadurch ist dem Fahrer die Halteposition und/oder die Startposition zuverlässig gemeldet, sodass ein sicheres Erreichen der Startposition realisiert werden kann.

Es hat sich weiterhin als vorteilhaft erwiesen, wenn abhängig von dem Vergleich der Halteposition mit der Startposition eine Ausgabe an den Fahrzeugführer erfolgt, dass bei der aktuellen Position des Kraftfahrzeugs bereits die Startposition erreicht ist oder nicht. Insbesondere kann dann abhängig von dem aus dem Wert des Parameters resultierenden, und nach der Ausgabe unmittelbar erfolgenden, weiteren Bewegungsverhalten des Kraftfahrzeugs und/oder mit dem, insbesondere nach Ausgabe unmittelbar, zu erwartenden Eingriffsverhalten des Fahrzeugführers in das Fahrverhalten des Kraftfahrzeugs das Kraftfahrzeug in Fahrtrichtung des Kraftfahrzeugs betrachtet zumindest an der bestimmten Startposition zum Stehen kommen. Insbesondere kann dann, sollte beispielsweise der Fahrer vor der Startposition zum Stillstand gekommen sein, der Fahrer eine weitere Vorwärtsbewegung des Kraftfahrzeugs initiieren, bis er tatsächlich auf der Startposition angekommen ist. Insbesondere ist es somit ermöglicht, dass ein verbesserter Einparkvorgang das Kraftfahrzeug möglich ist.

Gemäß einer weiteren vorteilhaften Ausgestaltungsform kann die aktuell erreichte Position des Kraftfahrzeugs unverzüglich dann als Startposition ausgegeben werden, wenn sich in Fahrtrichtung des Kraftfahrzeugs die Halteposition zumindest auf gleicher Höhe wie die Startposition befindet. Ebenfalls möglich ist, dass die aktuell erreichte Position des Kraftahrzeugs unverzüglich dann als Startposition ausgegeben wird, wenn sich in Fahrtrichtung des Kraftfahrzeugs die Halteposition weiter vorne als die Startposition befindet. Insbesondere kann dann vorgesehen sein, dass der Einparkvorgang mit einem geradlinigen Rückwärtsfahren des Kraftfahrzeugs eingeleitet wird, um den zurückgelegten Weg nach der Startposition auszugleichen. Insbesondere kann dadurch auch bei einem über-die-Position-hinausfahren der Einparkvorgang zuverlässig durchgeführt werden.

Es hat sich weiterhin als vorteilhaft erwiesen, wenn beim Vermessen der Parklücke eine Länge und/oder eine Tiefe der Parklücke bestimmt wird. Insbesondere kann zum Vermessen der Parklücke ein Sensor verwendet werden. Bevorzugt können mehrere Sensoren verwendet werden, die gleichmäßig an der Außenfläche des Kraftfahrzeugs verteilt angeordnet sind. Insbesondere können dadurch die räumlichen Abmessungen der Parklücke zuverlässig ermittelt werden, sodass zuverlässig bestimmt werden kann ob es sich bei der Parklücke um eine zum Parken für das Kraftfahrzeug geeignete Parklücke handelt. Somit kann zuverlässig die Startposition bestimmt werden, um in eine geeignete Parklücke einzuparken.

Ebenfalls vorteilhaft ist, wenn eine Parklückenart bestimmt wird, welche beschreibt, ob die Parklücke zum Längsparken oder zum Querparken vorgesehen ist, und die Halteposition zusätzlich in Abhängigkeit der bestimmten Parklückenart ermittelt wird. Da insbesondere eine Querparklücke eine unterschiedliche Startposition aufweist, als eine Längsparklücke, kann durch die Ermittlung der Parklückenart die Startposition auch zuverlässiger bestimmt werden, so dass ein verbesserter Einparkvorgang sowohl in eine Längs- als auch in eine Querparklücke realisiert werden kann.

Weiterhin vorteilhaft ist, wenn eine Fahrtrajektorie zum Bewegen des Kraftfahrzeugs ausgehend von der ermittelten Startposition in die Parklücke ermittelt wird und das Kraftfahrzeug zumindest semi-autonom, insbesondere autonom, entlang der ermittelten Fahrtrajektorie in die Parklücke bewegt wird. Beispielsweise kann dann, wenn das Kraftfahrzeug die Startposition erreicht hat, dass Kraftahrzeug entlang der bestimmten Fahrtrajektorie in die Parklücke eingeparkt werden. Dies kann insbesondere semi-autonom erfolgen. In solchen Fällen übernimmt beispielsweise ein Fahrerassistenzsystem den Lenkeingriff und der Fahrer betätigt das Gaspedal und die Bremse. Alternativ dazu kann das Kraftfahrzeug voll autonom eingeparkt werden. In diesem Fall übernimmt beispielsweise das Fahrassistenzsystem zusätzlich zu dem Lenkeingriff auch eine Ansteuerung einer Antriebseinrichtung und einer Bremseinrichtung des Kraftfahrzeugs. Somit kann dem Fahrer das Einparken erleichtert werden.

Ein weiterer Aspekt der Erfindung betrifft ein Fahrerassistenzsystem mit zumindest einer Erfassungseinrichtung und zumindest einer Steuereinrichtung, die zum Durchführen der Verfahrensschritte beziehungsweise einer vorteilhaften Ausgestaltungsform davon ausgebildet ist.

Ferner betrifft ein Aspekt der Erfindung ein Kraftfahrzeug mit einem Fahrerassistenzsystem. Das Kraftfahrzeug ist insbesondere als Personenkraftwagen ausgebildet.

Vorteilhafte Ausgestaltungsformen des Verfahrens sind als vorteilhafte Ausgestaltungsformen des Fahrassistenzsystems sowie des Kraftfahrzeugs anzusehen. Das Fahrassistenzsystem sowie das Kraftfahrzeug weisen dazu gegenständliche Merkmale auf, die die Durchführung des Verfahrens oder eine vorteilhafte Ausgestaltungsform davon ermöglichen.

Weitere Merkmale der Erfindung ergeben sich aus den Ansprüchen.

Ausführungsbeispiele werden nachfolgend anhand von schematischen Zeichnungen erläutert.

Dabei zeigen:
- Fig. 1: in schematischer Darstellung ein Kraftfahrzeug gemäß einer Ausführungsform der Erfindung;
- Fig. 2: ein bekanntes Kraftfahrzeug in einer ersten Verkehrssituation; und
- Fig. 3: ein Kraftfahrzeug mit einer Ausführungsform der Erfindung eines Fahrerassistenzsystems in einer zweiten Verkehrssituation.

In den Figuren werden gleiche oder funktionsgleiche Elemente mit den gleichen Bezugszeichen versehen.

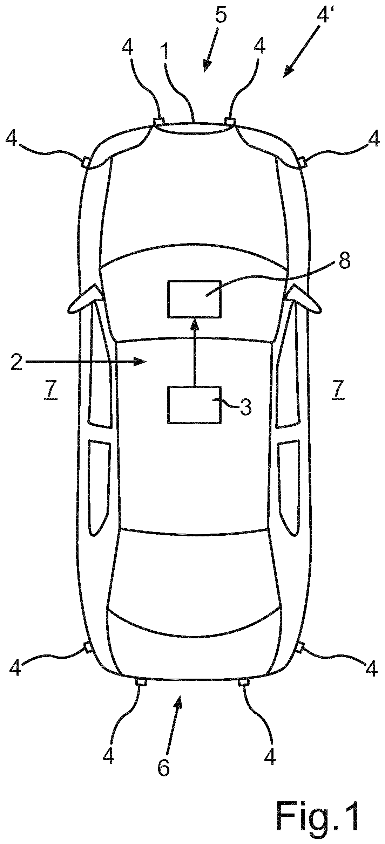

Fig. 1 zeigt ein Kraftfahrzeug 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, die beispielsweise durch ein Steuergerät des Kraftfahrzeugs 1 gebildet sein kann. Des Weiteren umfasst das Fahrerassistenzsystem 2 zumindest einen Sensor 4.

In dem vorliegenden Ausführungsbeispiel umfasst das Fahrerassistenzsystem 2 acht Sensoren 4. Dabei sind vier Sensoren 4 in einem Frontbereich 5 des Kraftfahrzeugs 1 und vier Sensoren 4 in einem Heckbereich 6 des Kraftfahrzeugs 1 angeordnet. Die Sensoren 4 sind insbesondere dazu ausgebildet, ein Objekt in einem Umgebungsbereich 7 des Kraftfahrzeugs 1 zu erfassen. Des Weiteren können die Sensoren 4 insbesondere dazu ausgelegt sein, einen Abstand zu einem Objekt in dem Umgebungsbereich 7 des Kraftfahrzeugs 1 zu erfassen. Die Sensoren 4 können beispielsweise als Ultraschallsensoren, Radarsensoren, Laserscanner oder dergleichen ausgebildet sein. Bevorzugt ist zumindest einer der Sensoren 4 als Laserscanner ausgebildet. Weiterhin kann es auch vorgesehen sein, dass weitere Sensoren beispielsweise an einem äußeren Seitenbereich des Kraftfahrzeugs 1 angeordnet sind. Insbesondere sind die Sensoren 4 Bestandteil einer Erfassungseinrichtung 4' des Kraftfahrzeugs 1, wobei die Erfassungseinrichtung 4' Bestandteil des Fahrerassistenzsystems 2 sein kann.

Darüber hinaus umfasst das Kraftfahrzeug 1 eine Anzeigeeinheit 8, die als Bildschirm beziehungsweise als Display ausgebildet sein kann, und die im Innenraum des Kraftfahrzeugs 1 angeordnet sein kann oder ein tragbares mobiles Endgerät sein kann. Die Anzeigeeinheit 8 kann beispielsweise als eine Kopf-oben-Anzeigeeinrichtung, welche auch als Head-up-Display bezeichnet wird, und/oder als Kombiinstrumentenanzeigeeinheit ausgebildet sein. Die Steuereinrichtung 3 ist mit den Sensoren 4 zur Datenübertragung verbunden. Entsprechende Datenleitungen sind vorliegend der Übersichtlichkeit halber nicht dargestellt. Darüber hinaus ist die Steuereinrichtung 3 mit der Anzeigeeinheit 8 zur Datenübertragung verbunden. Somit kann die Anzeige auf der Anzeigeeinheit 8 mittels der Steuereinrichtung 3 gesteuert werden.

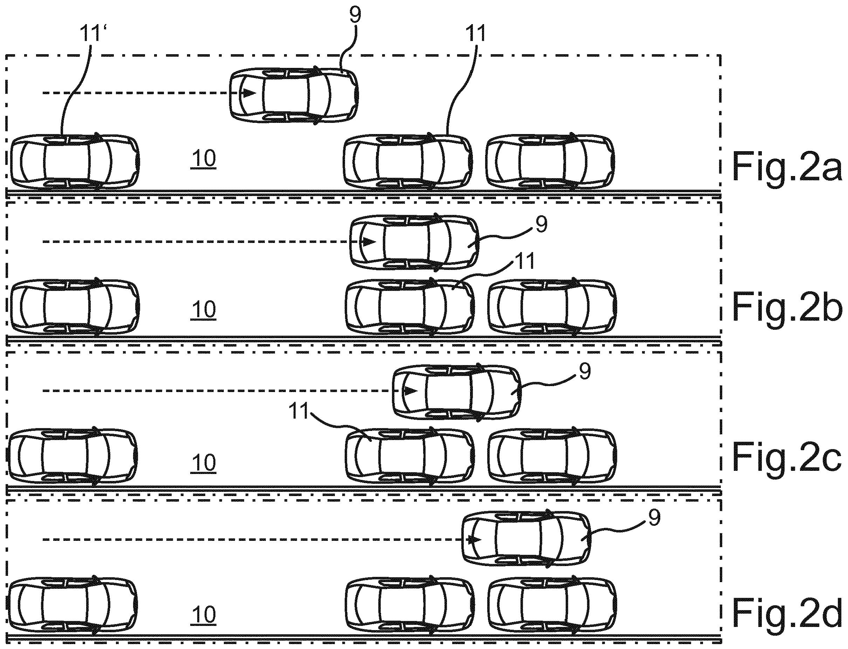

Die Fig. 2a bis 2d zeigen ein Kraftfahrzeug 9 aus dem Stand der Technik in einer ersten Verkehrssituation. In der Fig. 2a erfasst das Kraftfahrzeug 9 aus dem Stand der Technik eine Parklücke 10 zwischen zwei weiteren Kraftfahrzeugen 11, 11' mittels einer Erfassungseinrichtung des Kraftfahrzeugs 9. Das Kraftfahrzeug 9 befindet sich bereits neben der erfassten Parklücke 10 und bewegt sich während der Erfassung der Parklücke 10 mit einer Geschwindigkeit an der Parklücke 10 vorbei.

Nachdem die Parklücke 10 erfasst wurde und eine mögliche Startposition mittels einer Steuerungseinrichtung berechnet wurde, so wird, wie in Fig. 2b angezeigt, die Startposition an den Fahrer des Kraftfahrzeugs 9 ausgegeben. Fig. 2b zeigt, dass das Kraftfahrzeug 9, insbesondere aufgrund seiner Eigenbewegung, bereits auf Höhe des weiteren Kraftfahrzeugs 11 angekommen ist. Zu diesem Zeitpunkt wird dem Fahrer des Kraftfahrzeugs 9 erst die Startposition zum Starten des Einparkvorgangs angezeigt.

Aufgrund der Reaktionszeit des Fahrers des Kraftfahrzeugs 9 und/oder aufgrund der Latenzzeit des Systems, bis die Startposition für den Fahrer angezeigt ist, vergeht weitere Zeit, sodass sich das Kraftfahrzeug 9, bis eine Reaktion des Fahrers erfolgt, in der Position, wie in Fig. 2c angezeigt ist, befindet. Insbesondere ist das Kraftfahrzeug 9 in der in Fig. 2c gezeigten Position bereits über die Startposition hinweggefahren. Insbesondere ist bereits aus der Fig. 2b und 2c zu sehen, dass das Kraftfahrzeug 9 bereits über die Startposition hinweg gefahren ist.

In Fig. 2d ist zu sehen, an welcher Stelle das Kraftfahrzeug 9 tatsächlich zum Stillstand kommt nachdem die Startposition angezeigt wurde und das Kraftfahrzeug 9 den Anhalteweg abgefahren hat. Insbesondere befindet sich das Kraftfahrzeug 9 bereits entfernt von der Startposition und entfernt von der Parklücke 10, sodass der Einparkvorgang mit einem geradlinigen Rückwärtsfahren initiiert werden muss. Dies kann insbesondere unkomfortabel für den Fahrer sein und zu einer kritischen Situation mit einem weiteren Verkehrsteilnehmer, der sich insbesondere hinter dem Kraftfahrzeug 9 befindet, führen.

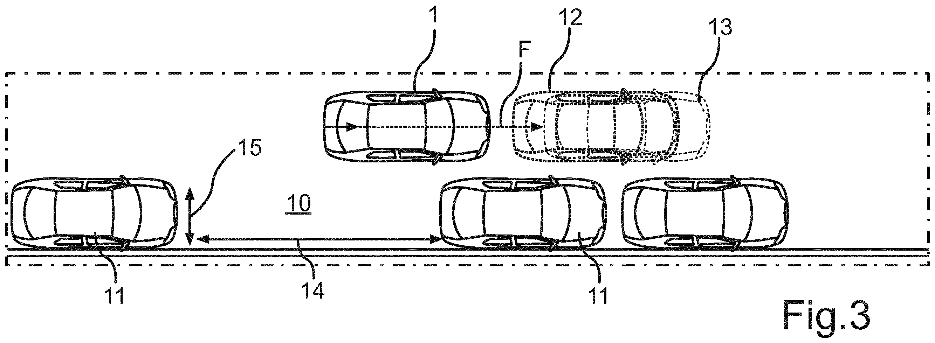

Fig. 3 zeigt das Kraftfahrzeug 1 mit einer Ausführungsform des Fahrerassistenzsystems 2 in einer weiteren Verkehrssituation. Bei einer Ausführungsform des erfindungsgemäßen Verfahrens zum Unterstützen eines Fahrers des Kraftfahrzeugs 1 beim Einparken wird mittels der Erfassungseinrichtung 4' des Kraftfahrzeugs 1 die Parklücke 10 vermessen und eine Startposition 12 des Kraftahrzeugs 1 für den Einparkvorgang in die Parklücke 10 in Abhängigkeit der Vermessung der Parklücke 10 bestimmt. Während der Vermessung der Parklücke 10 wird eine von zumindest einem aktuellen und/oder zumindest einen zukünftigen Wert zumindest eines den Betriebszustand des Kraftfahrzeugs 1 charakterisierten Parameter abhängige, zu erwartende Halteposition 13 des Kraftfahrzeugs 1 bestimmt und die Halteposition 13 mit der Startposition 12 verglichen. Insbesondere kann die Halteposition 13 von einer aktuellen und/oder zukünftigen Geschwindigkeit des Kraftfahrzeugs 1, von einer aktuellen und/oder zukünftigen Beschleunigung des Kraftfahrzeugs 1, von einer aktuellen und/oder zukünftigen Bewegungsrichtung des Kraftfahrzeugs 1 und/oder in Abhängigkeit eines aktuellen Lenkwinkels des Kraftfahrzeugs 1 und/oder in Abhängigkeit des zu erwartenden Reaktionszeit des Fahrers des Kraftfahrzeugs 1 bestimmt werden.

Insbesondere kann ein zukünftiger Wert eines der bereits beschriebenen Parameter geschätzt werden oder als abgespeicherter und festgelegter Erwartungswert zugrunde gelegt werden. Beispielsweise kann dann auf einem Speichermedium des Kraftfahrzeugs 1 die entsprechenden Erwartungswerte hinterlegt sein. Insbesondere können dazu beispielsweise abgespeicherte Reaktionszeiten als Erwartungswert zugrunde gelegt werden. Ebenfalls möglich ist das standardisierte Verzögerungen als zukünftige Beschleunigungswerte hinterlegt sind. Des Weiteren kann vorgesehen sein, dass das Schätzen des zukünftigen Parameters abhängig von zumindest einem aktuellen Wert eines Parameters durchgeführt wird. Beispielsweise kann eine Gaspedalstellung beziehungsweise eine Bremspedalstellung als aktueller Wert angesehen werden und anhand dieser Stellung eine zukünftige Beschleunigung und/oder einer zukünftige Geschwindigkeit des Kraftfahrzeugs 1 bestimmt werden. Insbesondere kann die Halteposition 13 somit in Abhängigkeit des zu erwartenden Anhaltewegs des Kraftfahrzeugs 1 bestimmt werden. Der Anhalteweg ist insbesondere von den aktuellen und/oder den zukünftigen Werten des Parameters abhängig. Beispielsweise können auch Witterungseinflüsse, wie beispielsweise Schnee, Regen oder Laub mit für den Anhalteweg berücksichtigt werden.

Insbesondere kann vorgesehen sein, dass die Halteposition 13 und die Startposition 12 auf der Anzeigeeinheit 8 des Kraftfahrzeugs 1 angezeigt wird. Insbesondere kann auch vorgesehen sein dass bei Erreichen der Startposition 12 dem Fahrer des Kraftfahrzeugs 1 eine haptische Rückmeldung ausgegeben wird, sodass der Fahrer des Kraftfahrzeugs 1 weiß, dass er die Startposition 12 erreicht hat. Beispielsweise wird, gemäß der Darstellung in Fig. 3, die Szenerie in Draufsicht angezeigt.

Insbesondere ist vorgesehen, dass abhängig von dem Vergleich der Halteposition 13 mit der Startposition 12 eine Ausgabe an den Fahrzeugführer erfolgt, insbesondere unverzüglich, dass bei der aktuellen Position des Kraftfahrzeugs 1 bereits die Startposition 12 erreicht ist. Ebenfalls möglich ist, dass die aktuell erreichte Position des Kraftahrzeugs 1 unverzüglich dann als Startposition 12 ausgegeben wird, wenn sich in einer Fahrtrichtung F des Kraftahrzeugs 1 die Halteposition 13 zumindest auf gleicher Höhe oder weiter vorne wie die Startposition 12 befindet. Insbesondere wird erst dann der Fahrer über die Startposition 12 in Kenntnis gesetzt, wenn in Fahrtrichtung F die Halteposition 13 zumindest auf der Höhe der Startposition 12 ist. Insbesondere wird der Fahrer dann sofort informiert. Insbesondere ist vorgesehen, dass noch keine Information an den Fahrer ergeht, wenn die Halteposition 13 in Fahrtrichtung F und näher zur aktuellen Position des Kraftfahrzeugs 1 liegt als die Startposition 12, denn dann würde das Kraftfahrzeug 1 vor der Startposition 12 zum Stehen kommen und könnte nicht auf Basis der die Startposition 12 aufweisenden Trajektorie einparken.

Ebenfalls kann vorgesehen sein, dass der Vergleich der Halteposition 13 mit der Startposition 12 erst dann durchgeführt wird, sobald ein vorbestimmter Genauigkeit-Schwellwert für die Bestimmung der Halteposition 13 überschritten wird. Insbesondere kann somit erst bei einer hinreichend genauen Bestimmung des Umgebungsbereichs 7 des Kraftfahrzeugs 1 der Vergleich der Halteposition 13 mit der Startposition 12 durchgeführt werden. Insbesondere ist dadurch eine Falschausgabe der Halteposition 13 verhindert. Insbesondere kann der Genauigkeits-Schwellwert beispielsweise abhängig von einer Geschwindigkeit des Kraftfahrzeugs 1 beziehungsweise des noch zurückzulegenden Wegs des Kraftfahrzeugs 1 bis zur Startposition 12 bestimmt werden. Beispielsweise kann somit verhindert werden, dass bei einer zu hohen Geschwindigkeit und einem zu langen noch zurückzulegenden Wegs die Halteposition 13 ausgeben wird.

Ebenfalls möglich ist, dass beim Vermessen der Parklücke 10 eine Länge 14 und/oder eine Tiefe 15 der Parklücke 10 bestimmt wird. Insbesondere kann dann abhängig von den Ausmaßen des Kraftfahrzeugs 1 und abhängig von der Länge 14 und/oder der Tiefe 15 die Startposition 12 ermittelt werden. Ebenfalls möglich ist, dass eine Parklückenart der Parklücke 10 bestimmt wird, wobei die Parklückenart beschreibt, ob die Parklücke 10 zum Längsparken oder zum Querparken vorgesehen ist. Insbesondere da bei Längs-Parklücken beziehungsweise Quer-Parklücken die Startpositionen 12 unterschiedlich sind, kann durch die Ermittlung, ob es sich bei der Parklücke 10 um eine LängsParklücke oder eine Quer-Parklücke handelt, die Startposition 12 zuverlässig ermittelt werden.

Insbesondere kann eine Fahrtrajektorie zum Bewegen des Kraftfahrzeugs 1 ausgehend von ermittelten Startposition 12 in die Parklücke 10 ermittelt werden und das Kraftfahrzeug 1 zumindest semi-autonom, insbesondere autonom, entlang der ermittelten Fahrtrajektorie in die Parklücke 10 bewegt werden.

## Patentansprüche

1. Verfahren zum Unterstützen eines Fahrers eines Kraftfahrzeugs (1) beim Einparken, bei welchem mittels zumindest einer Erfassungseinrichtung (4') des Kraftfahrzeugs (1) eine Parklücke (10) vermessen wird und eine Startposition (12) des Kraftfahrzeugs (1) für den Einparkvorgang in die Parklücke (10) in Abhängigkeit der Vermessung der Parklücke (10) bestimmt wird,
wobei während der Vermessung der Parklücke (10) eine von zumindest einem aktuellen und/oder zumindest einem zukünftigen Wert zumindest eines den Betriebszustand des Kraftfahrzeugs (1) charakterisierenden Paramater abhängige, zu erwartende Halteposition (13) des Kraftfahrzeugs (1) bestimmt wird und die Halteposition (13) mit der Startposition (12) verglichen wird,
**dadurch gekennzeichnet, dass**
der Vergleich der Halteposition (13) mit der Startposition (12) durchgeführt wird, sobald ein vorbestimmter Genauigkeits-Schwellwert für die Bestimmung der Halteposition (13) überschritten wird.

2. Verfahren nach Anspruch 1,
**dadurch gekennzeichnet, dass**
die Halteposition (13) in Abhängigkeit einer aktuellen und/oder zukünftigen Geschwindigkeit des Kraftfahrzeugs (1) und/oder in Abhängigkeit einer aktuellen und/oder zukünftigen Beschleunigung des Kraftfahrzeugs (1) und/oder in Abhängigkeit einer aktuellen und/oder zukünftigen Bewegungsrichtung des Kraftfahrzeugs (1) und/oder in Abhängigkeit eines aktuellen Lenkwinkels des Kraftfahrzeugs (1) und/oder in Abhängigkeit einer zu erwartenden Reaktionszeit des Fahrers als Parameter bestimmt wird.

3. Verfahren nach einem der vorhergehenden Ansprüche,
**dadurch gekennzeichnet, dass**
ein zukünftiger Wert eines Parameters geschätzt wird oder als abgespeicherter und festgelegter Erwartungswert zugrunde gelegt wird.

4. Verfahren nach Anspruch 3,
**dadurch gekennzeichnet, dass**
das Schätzen abhängig von zumindest einem aktuellen Wert eines Parameters durchgeführt wird.

5. Verfahren nach einem der vorhergehenden Ansprüche,
**dadurch gekennzeichnet, dass**
die Halteposition (13) in Abhängigkeit eines zu erwartenden Anhaltewegs des Kraftfahrzeugs (1) bestimmt wird, wobei der Anhalteweg abhängig von dem zumindest einen aktuellen und/oder zumindest einen zukünftigen Wert zumindest eines den Betriebszustand des Kraftfahrzeugs (1) charakterisierenden Parameters bestimmt wird.

6. Verfahren nach einem der vorhergehenden Ansprüche,
**dadurch gekennzeichnet, dass**
die Halteposition (13) optisch auf einer Anzeigeeinheit (8) angezeigt wird und die Startposition (12) auf einer Anzeigeeinheit (8) angezeigt wird.

7. Verfahren nach einem der vorhergehenden Ansprüche,
**dadurch gekennzeichnet, dass**
abhängig von dem Vergleich der Halteposition (13) mit der Startposition (12) eine Ausgabe an den Fahrzeugführer erfolgt, dass bei der aktuellen Position des Kraftfahrzeugs (1) bereits die Startposition (12) erreicht ist oder nicht.

8. Verfahren nach Anspruch 7,
**dadurch gekennzeichnet, dass**
die aktuell erreichte Position des Kraftfahrzeugs (1) unverzüglich dann als Startposition (12) ausgegeben wird, wenn sich in Fahrtrichtung (F) des Kraftfahrzeugs (1) die Halteposition (13) zumindest auf gleicher Höhe wie die Startposition (12) befindet.

9. Verfahren nach einem der vorhergehenden Ansprüche,
**dadurch gekennzeichnet, dass**
beim Vermessen der Parklücke (10) eine Länge (14) und/oder eine Tiefe (15) der Parklücke (10) bestimmt wird.

10. Verfahren nach einem der vorhergehenden Ansprüche,
**dadurch gekennzeichnet, dass**
eine Parklückenart bestimmt wird, welche beschreibt, ob die Parklücke (10) zum Längsparken oder zum Querparken vorgesehen ist, und die Halteposition (13) zusätzlich in Abhängigkeit der bestimmten Parklückenart ermittelt wird.

11. Verfahren nach einem der vorhergehenden Ansprüche,
**dadurch gekennzeichnet, dass**
eine Fahrtrajektorie zum Bewegen des Kraftfahrzeugs (1) ausgehend von der ermittelten Startposition (12) in die Parklücke (10) ermittelt wird und das Kraftfahrzeug (1) zumindest semi-autonom, insbesondere autonom, entlang der ermittelten Fahrtrajektorie in die Parklücke (10) bewegt wird.

12. Fahrerassistenzsystem (2) mit zumindest einer Erfassungseinrichtung (4') und zumindest einer Steuereinrichtung (3), die zum Durchführen eines Verfahrens nach einem der Ansprüche 1 bis 11 ausgebildet ist.

13. Kraftfahrzeug (1) mit einem Fahrerassistenzsystem (2) nach Anspruch 12.

## Claims

1. Method for assisting a driver of a motor vehicle (1) when parking, in which a parking space (10) is measured by means of a sensing device (4') of the motor vehicle (1), and a starting position (12) in the motor vehicle (1) for the process of parking in the parking space (10) is determined in accordance with the measurement of the parking space (10), wherein during the measurement of the parking space (10) an expected stopping position (13), dependent on at least one current and/or at least one future value of at least one parameter characterizing the operating state of the motor vehicle (1), is determined, and the stopping position (13) is compared with the starting position (12),
**characterized in that**
the comparison of the stopping position (13) with the starting position (12) is carried out as soon as a predetermined accuracy threshold value for the determination of the stopping position (13) is exceeded.

2. Method according to Claim 1,
**characterized in that**
the stopping position (13) is determined in accordance with a current and/or future speed of the vehicle (1) and/or as a function of a current and/or future acceleration of the vehicle (1) and/or in accordance with a current and/or future direction of movement of the motor vehicle (1) and/or in accordance with a current steering angle of the motor vehicle (1) and/or in accordance with an expected reaction time of the driver as a parameter.

3. Method according to one of the preceding claims,
**characterized in that**
a future value of the parameter is estimated or is used as a basis, as a stored and specified expected value.

4. Method according to Claim 3,
**characterized in that**
the estimation is carried out as a function of at least one current value of a parameter.

5. Method according to one of the preceding claims,
**characterized in that**
the stopping position (13) is determined in accordance with an expected stopping distance of the motor vehicle (1), wherein the stopping distance is determined in dependence on the at least one current and/or at least one future value of at least one parameter which characterizes the operating state of the motor vehicle (1).

6. Method according to one of the preceding claims,
**characterized in that**
the stopping position (13) is displayed visually on a display unit (8), and the starting position (12) is displayed on a display unit (8).

7. Method according to one of the preceding claims,
**characterized in that**
depending on the comparison of the stopping position (13) with the starting position (12) an output is made to the vehicle driver indicating whether the starting position (12) has already been reached or not at the current position of the motor vehicle (1) .

8. Method according to Claim 7,
**characterized in that**
the currently reached position of the motor vehicle (1) is immediately output as a starting position (12) if the stopping position (13) is located at the same level as the starting position (12) in the direction of travel (F) of the motor vehicle (1).

9. Method according to one of the preceding claims,
**characterized in that**
when the parking space (10) is measured, a length (14) and/or a depth (15) of the parking space (10) are/is determined.

10. Method according to one of the preceding claims,
**characterized in that**
a type of parking space is determined which describes whether the parking space (10) is provided for longitudinal parking or for diagonal parking, and the stopping position (13) is additionally ascertained in accordance with the determined type of parking space.

11. Method according to one of the preceding claims,
**characterized in that**
a trajectory for the movement of the motor vehicle (1) starting from the ascertained starting position (12) into the parking space (10) is ascertained, and the motor vehicle (1) is moved at least semi-autonomously, in particular autonomously, into the parking space (10) along the ascertained trajectory.

12. Driver assistance system (2) having at least one sensing device (4') and at least one control device (3) which is designed to carry out a method according to one of Claims 1 to 11.

13. Motor vehicle (1) having a driver assistance system (2) according to Claim 12.

## Revendications

1. Procédé d'aide à la conduite d'un véhicule automobile (1) lors du stationnement, dans lequel, au moyen d'au moins un dispositif de détection (4') du véhicule automobile (1), une place de stationnement (10) est mesurée et une position de départ (12) du véhicule automobile (1) pour l'opération de stationnement dans la place de stationnement (10) est déterminée en fonction de la mesure de la place de stationnement (10),
dans lequel, pendant la mesure de la place de stationnement (10), une position d'arrêt attendue (13) du véhicule automobile (1) est déterminée, qui dépend d'au moins une valeur actuelle et/ou d'au moins une valeur future d'au moins un paramètre caractérisant l'état de fonctionnement du véhicule automobile (1), et la position d'arrêt (13) est comparée à la position de départ (12),
**caractérisé en ce que** la comparaison de la position d'arrêt (13) à la position de départ (12) est effectuée dès qu'une valeur de consigne de précision prédéterminée pour la détermination de la position d'arrêt (13) est dépassée.

2. Procédé selon la revendication 1, **caractérisé en ce que** la position d'arrêt (13) est déterminée comme paramètre en fonction d'une vitesse actuelle et/ou future du véhicule automobile (1) et/ou en fonction d'une accélération actuelle et/ou future du véhicule automobile (1) et/ou en fonction d'un sens de la marche actuel et/ou futur du véhicule automobile (1) et/ou en fonction d'un angle de direction actuel du véhicule automobile (1) et/ou en fonction d'un temps de réaction attendu du conducteur.

3. Procédé selon l'une quelconque des revendications précédentes, **caractérisé en ce qu'**une valeur future d'un paramètre est estimée ou est établie comme une valeur attendue mémorisée et fixée.

4. Procédé selon la revendication 3, **caractérisé en ce que** l'estimation est effectuée en fonction d'au moins une valeur actuelle d'un paramètre.

5. Procédé selon l'une quelconque des revendications précédentes, **caractérisé en ce que** la position d'arrêt (13) est déterminée en fonction d'une distance d'arrêt attendue du véhicule automobile (1), la distance d'arrêt étant déterminée en fonction de ladite au moins une valeur actuelle et/ou de ladite au moins une valeur future d'un paramètre caractérisant l'état de fonctionnement du véhicule automobile (1).

6. Procédé selon l'une quelconque des revendications précédentes, **caractérisé en ce que** la position d'arrêt (13) est affichée visuellement sur une unité d'affichage (8) et la position de départ (12) est affichée sur une unité d'affichage (8).

7. Procédé selon l'une quelconque des revendications précédentes, **caractérisé en ce qu'**en fonction de la comparaison de la position d'arrêt (13) à la position de départ (12), une sortie pour le conducteur du véhicule est effectuée indiquant qu'une position de départ (12) a déjà été atteinte ou pas à la position actuelle du véhicule automobile (1).

8. Procédé selon la revendication 7, **caractérisé en ce que** la position du véhicule automobile (1) actuellement atteinte est alors émise directement comme position de départ (12), si la position d'arrêt (13) se trouve au moins au même niveau que la position de départ (12) dans le sens de la marche (F) du véhicule automobile (1).

9. Procédé selon l'une quelconque des revendications précédentes, **caractérisé en ce qu'**une longueur (14) et/ou une profondeur (15) de la place de stationnement (10) sont déterminées lorsque la place de stationnement (10) est mesurée.

10. Procédé selon l'une quelconque des revendications précédentes, **caractérisé en ce qu'**un type de place de stationnement est déterminé qui décrit si la place de stationnement (10) est prévue pour le stationnement longitudinal ou le stationnement transversal, et la position d'arrêt (13) est de plus déterminée en fonction du type de place de stationnement déterminé.

11. Procédé selon l'une quelconque des revendications précédentes, **caractérisé en ce qu'**une trajectoire de conduite pour déplacer le véhicule automobile (1) dans la place de stationnement (10) en partant de la position de départ (12) est déterminée, et le véhicule automobile (1) est déplacé au moins de manière semi-autonome, en particulier de manière autonome, le long de la trajectoire de conduite déterminée dans la place de stationnement (10).

12. Système d'aide à la conduite (2), comprenant au moins un dispositif de détection (4') et au moins un dispositif de commande (3) qui est réalisé pour exécuter un procédé selon l'une quelconque des revendications 1 à 11.

13. Véhicule automobile (1), comprenant un système d'aide à la conduite (2) selon la revendication 12.
